(19) Europäisches Patentamt
European Patent Office
Office européen des brevets

(11) **EP 2 789 837 A1**

(12) **EUROPEAN PATENT APPLICATION**
published in accordance with Art. 153(4) EPC

(43) Date of publication:
**15.10.2014 Bulletin 2014/42**

(51) Int Cl.:
*F02D 45/00* (2006.01)    *F02D 41/18* (2006.01)

(21) Application number: **11877013.0**

(22) Date of filing: **07.12.2011**

(86) International application number:
**PCT/JP2011/078304**

(87) International publication number:
**WO 2013/084318 (13.06.2013 Gazette 2013/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventors:
• **KATSUMATA, Machiko**
**Toyota-shi**
**Aichi 471-8571 (JP)**

• **MORIGUCHI, Ryutaro**
**Toyota-shi**
**Aichi 471-8571 (JP)**

(74) Representative: **Intès, Didier Gérard André et al Cabinet Beau de Loménie**
**158, rue de l'Université**
**75340 Paris Cedex 07 (FR)**

(54) **CONTROL DEVICE FOR SUPERCHARGED ENGINE**

(57)    An object of the present invention is to improve the accuracy of predicting an in-cylinder intake air amount in a control device that predicts an in-cylinder intake air amount of a supercharged engine and controls the supercharged engine based on the predicted value, and particularly the accuracy during transient operation. To achieve this object, the present control device calculates a predicted value of a supercharging pressure based on a predicted value of a degree of throttle opening using a physical model of the supercharged engine, and also calculates a correction amount thereof. When calculating the correction amount, a measurement value of the supercharging pressure measured by a supercharg-

ing pressure sensor is acquired, and an estimated value of the supercharging pressure is calculated based on a measurement value of a degree of throttle opening using a physical model of the supercharged engine. A difference between the measurement value and the estimated value of the supercharging pressure is calculated, and the difference is adopted as a correction amount for the predicted value of the supercharging pressure. The present control device calculates a predicted value of the in-cylinder intake air amount based on the corrected predicted value of the supercharging pressure and a predicted value of the degree of throttle opening.

Fig.1

**Description**

Technical Field

The present invention relates to a control device for a supercharged engine, and more particularly to a control device that controls a supercharged engine based on a predicted value of an in-cylinder intake air amount.

Background Art

Electronically controlled throttles are used in engines of modem-day automobiles. In an engine equipped with an electronically controlled throttle, a target degree of throttle opening is determined based on the amount of an accelerator operation performed by the driver, and the throttle is operated in accordance with the target degree of throttle opening. At such time, a configuration can be adopted so that the determined target degree of throttle opening is not immediately applied to the throttle, and instead the application thereof to the throttle is delayed by a certain time period. Such a calculation process is referred to as "throttle delay control". According to the throttle delay control, since a change in the actual degree of throttle opening is delayed by the amount of a delay time relative to a change in the target degree of throttle opening, a future degree of throttle opening that is further in the future by an amount of time that corresponds to the delay time can be predicted based on the target degree of throttle opening. The fact that it is possible to predict a future degree of throttle opening is useful for improving the accuracy of air-fuel ratio control for a port injection type engine that injects fuel into an intake port and for an engine that combines use of port injection and direct in-cylinder injection. Although an in-cylinder intake air amount is determined at a time point that an intake valve closes, in the case of an engine that performs port injection, the timing at which to start fuel injection arrives before the time point at which the intake valve closes. Consequently, in order to accurately calculate a fuel injection amount necessary to realize the target air-fuel ratio, at the time point at which fuel injection starts, it is necessary to predict the in-cylinder intake air amount that will be determined at a future time. According to the throttle delay control, since the degree of throttle opening at a time point at which the intake valve will close at a future time can be predicted based on the target degree of throttle opening, an in-cylinder intake air amount can be predicted on the basis of the predicted degree of throttle opening.

A physical model that physically models the behavior of air inside an intake passage is used to calculate an in-cylinder intake air amount based on a predicted degree of throttle opening. In the case of a naturally aspirated engine, a physical model for calculating an in-cylinder intake air amount can be constituted by a throttle model, an intake pipe model and an intake valve model. The throttle model is a model for calculating a flow rate of air passing through the throttle. More specifically, an orifice flow formula that is based on a pressure difference between pressures before and after a throttle, a flow channel area that depends on the degree of throttle opening, and a flow rate coefficient is used as a throttle model. The intake pipe model is a model that is constructed based on a conservation law relating to air inside an intake pipe. More specifically, an expression of an energy conservation law and an expression of a flow rate conservation law are used as the intake pipe model. The intake valve model is a model based on experiments that examined a relationship between the intake valve flow rate and the intake pipe pressure. The relationship between the intake valve flow rate and the intake pipe pressure is approximated by one or a plurality of straight lines in the intake valve model by means of an empirical rule obtained by experiment.

In a calculation using the above described physical model, the extent to which the influence of modelling errors is eliminated from the calculation is important in terms of ensuring the prediction accuracy with respect to an in-cylinder intake air amount. A method disclosed in Japanese Patent No. 3760757 can be mentioned as one example of a method for improving the prediction accuracy with respect to an in-cylinder intake air amount by a physical model. According to the method disclosed in the aforementioned gazette, a first intake pipe pressure that is a pressure after a predetermined time has elapsed from the current time is calculated based on a throttle flow rate that is calculated on the basis of the degree of throttle opening, and a second intake pipe pressure is calculated based on the output of an air flow meter. Further, an air flow meter output including a time lag is calculated by inputting the current throttle flow rate into an air flow meter model, and an intake pipe pressure having the same response as the second intake pipe pressure is calculated based on the air flow meter output. Further, a predicted pressure is calculated by subtracting the intake pipe pressure of the same response from a value obtained by adding the first intake pipe pressure and the second intake pipe pressure, and an estimated value of the intake valve flow rate is calculated based on the predicted pressure. The estimated value of the intake valve flow rate that is calculated according to this method matches the output of the air flow meter during steady operation. That is, according to the method described in the aforementioned gazette, the prediction accuracy with respect to an in-cylinder intake air amount is improved by compensating for a modelling error during steady operation.

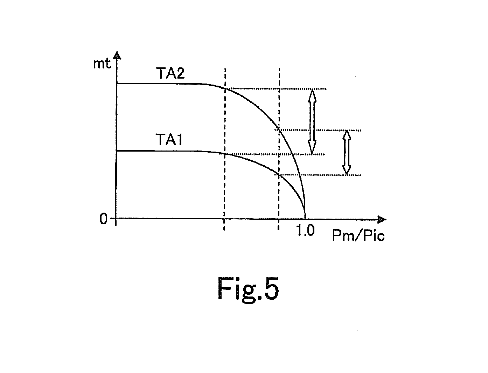

A method for predicting an in-cylinder intake air amount using a physical model can be applied not just to a naturally aspirated engine, but also to a supercharged engine that includes a turbo-supercharger or a mechanical supercharger. However, there is a significant difference with respect to a premise relating to a pressure upstream of a throttle between a supercharged engine and a naturally aspirated engine. In the case of a naturally aspirated engine, the pressure upstream of the throttle can be regarded as being approximately equal to the atmospheric pressure. In contrast, in the case of a supercharged engine, the pressure upstream of the throttle varies depending on the rotation speed of the compressor and the degree of throttle opening. It is necessary to calculate the throttle flow rate in order to estimate the intake valve flow rate. The pressure upstream of the throttle is used when calculating the throttle flow rate. Figure 5 is a view that illustrates a relationship between a pressure ratio "Pm/Pic" that is a ratio of the pressure downstream of the throttle to the pressure upstream of the throttle, and a throttle flow rate "mt". As shown in the drawing, the sensitivity of a change in the throttle flow rate "mt" when the degree of throttle opening changes from "TA1" to "TA2" depends on the pressure ratio "Pm/Pic". Therefore, if the accuracy of a value for the pressure upstream of the throttle that is used for calculation is low, the calculation accuracy with respect to the throttle flow rate will be low, and consequently the prediction accuracy with respect to the in-cylinder intake air amount will also be low. Hence, highly accurate information relating to the pressure upstream of the throttle is necessary when applying a technique for predicting an in-cylinder intake air amount using a physical model to a supercharged engine.

The pressure upstream of a throttle of a supercharged engine, that is, a supercharging pressure, can be measured by a supercharging pressure sensor installed in the intake passage. Hence, a method in which a measurement value of the supercharging pressure is acquired by the supercharging pressure sensor, and the measurement value is input into a physical model is conceivable as one method of predicting an in-cylinder intake air amount. However, according to this method there is a problem with respect to the accuracy of predicting the in-cylinder intake air amount, particular the prediction accuracy at a time of transient operation of the engine. While an in-cylinder intake air amount that is calculated with a physical model is a predicted future value, a supercharging pressure obtained by a supercharging pressure sensor is a measured value at the present time. During transient operation of the engine, the supercharging pressure varies significantly according to the operations of actuators such as the throttle and waste gate valve. Consequently, a situation can easily occur in which the supercharging pressure changes during a period from a time point at which the supercharging pressure is measured until a time point at which the in-cylinder intake air amount is predicted. In such case, an error that corresponds to the amount of change in the supercharging pressure will arise between the predicted value of the in-cylinder intake air amount and the actual value thereof (the actual value at the time the intake valve closes).

On the other hand, if the aforementioned physical model is used, a future supercharging pressure can be predicted based on the predicted degree of throttle opening. If the supercharging pressure at the time the intake valve closes can be predicted, a predicted value of the in-cylinder intake air amount can be obtained based on the predicted value of the supercharging pressure and the predicted degree of throttle opening. However, a calculation made by a physical model can include modelling errors that arise due to a variety of factors such as an adaptive error when creating the physical model, variations in the manufacture of engine components, environmental variations, aged deterioration, and hysteresis error of actuators. Hence, in the case of calculating a predicted value of an in-cylinder intake air amount based on a predicted value of a supercharging pressure using a physical model, there is a possibility that an error that is attributable to a modelling error will arise between the predicted value and the actual value of the in-cylinder intake air amount (actual value at the time the intake valve closes).

As described above, information relating to the supercharging pressure that varies according to the operating state of the engine is necessary in order to accurately predict an in-cylinder intake air amount of a supercharged engine using a physical model. However, even if a measurement value of a supercharging pressure obtained by a supercharging pressure sensor is merely input, or if a predicted value of a supercharging pressure obtained by a physical model is merely input, it is difficult to predict an in-cylinder intake air amount, particularly an in-cylinder intake air amount during a transient operation, with a high degree of accuracy using only those values.

Citation List

Patent Literature

Patent Literature 1: Japanese Patent No. 3760757

Summary of Invention

An object of the present invention is to improve the prediction accuracy with respect to an in-cylinder intake air amount, in particular, an in-cylinder intake air amount during a transient operation, in a control device that predicts an in-cylinder intake air amount of a supercharged engine and controls the supercharged engine based on the predicted value. As an approach for achieving the foregoing object, the present invention uses a predicted value of a supercharging pressure that is predicted by a physical model for calculating a predicted value of an in-cylinder intake air amount, and uses a measurement value of a supercharging pressure that is measured by a supercharging pressure sensor to compensate for a modelling error included in the predicted value. That is, a measurement value of a supercharging pressure that is measured by a supercharging pressure sensor and a predicted value of a supercharging pressure that is predicted by a physical model are utilized in a mutually complementary manner.

More specifically, according to one aspect of the present invention, the present control device acquires a predicted value of a degree of throttle opening at a time point that is a predetermined time after a present time point. Then, using a physical model of the supercharged engine, the present control device calculates a predicted value of a supercharging pressure based on the predicted value of the degree of throttle opening. In parallel therewith, the present control device acquires a measurement value of the supercharging pressure that is measured by a supercharging pressure sensor and also acquires a measurement value of the degree of throttle opening that is measured by a throttle opening sensor, and calculates an estimated value of the supercharging pressure based on the measurement value of the degree of throttle opening using the physical model. Because the measurement value of the supercharging pressure measured by the supercharging pressure sensor and the estimated value of the supercharging pressure estimated by the physical model are supercharging pressure information for the same point in time, theoretically the two values should agree. If there is a difference between the two values, the difference can be said to be due to a modelling error. The present control device calculates a difference between the measurement value and the estimated value of a supercharging pressure, and corrects the predicted value of the supercharging pressure by using the aforementioned difference as a correction amount. Computationally, the corrected predicted value of the supercharging pressure is equal to a measurement value of the supercharging pressure during steady operation. This indicates that a pressure error included in the predicted value of the supercharging pressure is compensated for by the correction using the correction amount. The present control device calculates a predicted value of an in-cylinder intake air amount based on the predicted value of the supercharging pressure corrected in this manner and the predicted value of the degree of throttle opening.

In the process of calculating a predicted value of the in-cylinder intake air amount, a measurement value of an intake air flow rate obtained by a flow rate sensor can be used as additional information for compensating for a modelling error. In this case, the present control device calculates a predicted value of an intake pipe pressure based on the corrected predicted value of the supercharging pressure and the predicted value of the degree of throttle opening using a first sub-model that constitutes one part of the physical model. Further, the present control device acquires a measurement value of an intake air flow rate that is measured by a flow rate sensor, and calculates a first estimated value of the intake pipe pressure based on the measurement value of the intake air flow rate using a second sub-model that constitutes one part of the physical model. In addition, the present control device calculates a second estimated value of the intake pipe pressure based on a value of a predetermined flow rate in an intake passage (for example, a compressor flow rate) that is calculated by the physical model, using a response model of the flow rate sensor and the second sub-model. The response model of the flow rate sensor is a model in which a response lag with respect to an actual value of a measurement value of the intake air flow rate obtained by the flow rate sensor is modelled. Hence, a value obtained by applying a flow rate in the intake passage that is calculated by the physical model to the response model of the flow rate sensor should theoretically agree with a measurement value of the intake air flow rate obtained by the flow rate sensor. Furthermore, theoretically the first estimated value and the second estimated value of the intake pipe pressure that are calculated based on the aforementioned values should also agree with each other. If a difference arises between the first estimated value and the second estimated value of the intake pipe pressure, it can be said that the difference is caused by a flow rate error that is ascribable to a modelling error. The present control device calculates a difference between the first estimated value and the second estimated value of the intake pipe pressure, and corrects the predicted value of the intake pipe pressure by using the aforementioned difference as a correction amount. The present control device calculates the predicted value of the in-cylinder intake air amount based on the predicted value of the intake pipe pressure that was corrected in this manner.

Although a flow rate error that results from a modelling error is compensated for by the above described correction, in a situation in which an error arises between a measurement value and an estimated value of the supercharging pressure there is a possibility that the corrected predicted value and the first estimated value of the intake pipe pressure will not completely agree during steady operation. To further increase the prediction accuracy with respect to an in-cylinder intake air amount, it is preferable to additionally execute the following computational process in addition to the above described computational process. According to the additional process, the present control device calculates a third estimated value of the intake pipe pressure based on the measurement value of the supercharging pressure and the measurement value of the degree of throttle opening using the first sub-model. The present control device then calculates a difference between the third estimated value of the intake pipe pressure and a fourth estimated value of the intake pipe pressure that is calculated by the physical model during a process of calculating the estimated value of the supercharging pressure, and further corrects the corrected predicted value of the intake pipe pressure by using the aforementioned difference as a correction amount. According to this correction, the predicted value of the intake pipe pressure during steady operation is cancelled out by the third estimated value, and the second estimated value of the intake pipe pressure is cancelled out by the fourth estimated value. As a result, computationally, the predicted value of the intake pipe pressure after correction is equal to the first estimated value that is based on the measurement value obtained by the flow rate sensor. This indicates that both a flow rate error and a pressure error that are caused by a modelling error are compensated for by correction. The present control device calculates the predicted value of the in-cylinder intake air amount based on the predicted value of the intake pipe pressure that is corrected in this manner.

Brief Description of Drawings

[Figure 1] Figure 1 is a block diagram illustrating an in-cylinder intake air amount prediction model that is used by a control device for a supercharged engine according to an embodiment of the present invention.
[Figure 2] Figure 2 is a block diagram illustrating an in-cylinder intake air amount prediction model that is used by the control device for a supercharged engine according to the embodiment of the present invention.
[Figure 3] Figure 3 is a block diagram illustrating an in-cylinder intake air amount prediction model that is used by the control device for a supercharged engine according to the embodiment of the present invention.
[Figure 4] Figure 4 is a block diagram illustrating an in-cylinder intake air amount prediction model that is used by the control device for a supercharged engine according to the embodiment of the present invention.
[Figure 5] Figure 5 is a view illustrating that the sensitivity of a change in a throttle flow rate immediately after a change in a degree of throttle opening is dependent on a ratio between pressures before and after the throttle.

Description of Embodiment

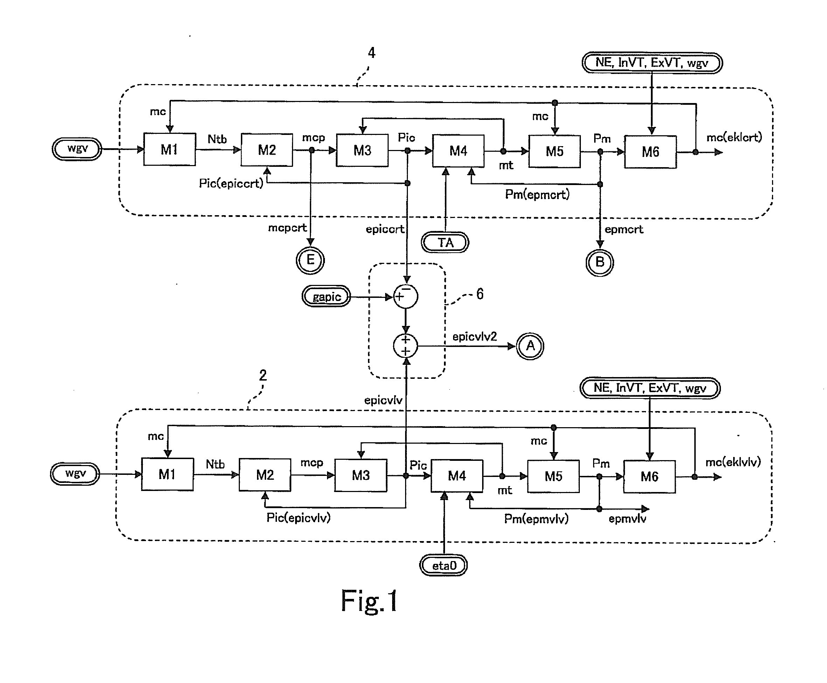

An embodiment of the present invention will now be described with reference to the accompanying drawings.
A supercharged engine to which the control device of the present embodiment is applied is a spark ignition-type four-cycle reciprocating engine that controls the torque by adjusting an air amount by means of a throttle. A supercharger that the supercharged engine of the present embodiment includes is a turbo-supercharger that drives a compressor that is disposed in an intake passage by rotation of a turbine that is disposed in an exhaust passage. A waste gate valve that can actively control the degree of opening of the turbine is attached to the turbine. An intercooler for cooling air whose temperature was increased by compression at the compressor is provided between the compressor and the throttle. In addition, the supercharged engine of the present embodiment is also a port injection type engine that injects fuel into an intake port of respective cylinders.
The control device of the present embodiment is implemented as one part of the functions of an ECU (Electronic Control Unit) that controls the supercharged engine. Various kinds of information and signals relating to the operating state and operating conditions of the engine are input to the ECU from various sensors such as an air flow meter that is a flow rate sensor, a supercharging pressure sensor and a throttle opening sensor. The ECU operates various kinds of actuators such as a throttle and a waste gate valve based on such information and signals.
The ECU as a control device has a function that predicts an in-cylinder intake air amount. In the case of a port injection type engine, it is necessary to calculate a required fuel injection amount and start fuel injection before an intake valve closes and the in-cylinder intake air amount is determined. Consequently, when calculating a fuel injection amount, it is necessary to predict an in-cylinder intake air amount that will be determined at a future time. A programmed in-cylinder intake air amount prediction model is used by the ECU to predict an in-cylinder intake air amount. The in-cylinder intake air amount prediction model is a model that physically models the behavior of air in a supercharged engine. An outline thereof is illustrated in the block diagrams of Figure 1, Figure 2, Figure 3 and Figure 4, respectively.
As shown in Figure 1 to Figure 4, an in-cylinder intake air amount prediction model that is used in the present embodiment is constituted by eight calculation blocks denoted by reference numerals 2, 4, 6, 8, 10, 12, 14, 16 and 18. Hereunder, the configuration and functions of the calculation blocks shown in the respective drawings are described in order starting from Figure 1.
Three calculation blocks, namely, blocks 2, 4 and 6 are illustrated in Figure 1. The calculation block 2 is a calculation block for calculating a predicted value of a supercharging pressure at a future time point based on a predicted value of a degree of throttle opening. The predicted value of the degree of throttle opening is pre-read based on a target degree of throttle opening that is determined on the basis of an accelerator operation amount in throttle delay control that is executed separately by the ECU. According to the present embodiment, it is assumed that a degree of throttle opening at a time point that is further in the future relative to the present time point by an amount of time corresponding to a predetermined control period is predicted based on the target degree of throttle opening.
The calculation block 2 is a single physical model that is constituted by a plurality of element models, namely, a turbo rotational speed model M1, a compressor model M2, an intercooler model M3, a throttle model M4, an intake pipe model M5, and an intake valve model M6. Hereunder, the contents of these element models of the calculation block 2 are described. However, because each of these element models is known and the element models are not a feature of the present invention, a description of the details of the respective element models such as a mathematical expression or a map is omitted herein.

The turbo rotational speed model M1 is a model of the rotational behavior of the turbo-supercharger, in which a relationship established between an intake valve flow rate, a degree of waste gate valve opening and a turbo rotational speed is modelled. The turbo rotational speed model M1 is constituted by a mathematical expression or a map based on experimental data. A degree of waste gate valve opening "wgv" that is estimated on the basis of an operation amount of the waste gate valve, and an intake valve flow rate "mc" that is calculated by the intake valve model M6 that is described later are inputted to the turbo rotational speed model M1, and a turbo rotational speed "Ntb" is calculated based on the input information.

The compressor model M2 is a model of a compressor of a turbo-supercharger, and models a relationship that is established between a turbo rotational speed, a supercharging pressure and a compressor flow rate. The compressor model M2 is constituted by a mathematical expression or a map based on experimental data. Information such as the turbo rotational speed "Ntb" calculated by the turbo rotational speed model M1 and a supercharging pressure "Pic(epicvlv)" that is calculated by the intercooler model M3 that is described later is inputted to the compressor model M2, and a compressor flow rate "mcp" is calculated based on the input information. Note that the characters "epicvlv" added to "Pic" that is a reference symbol denoting a supercharging pressure are characters for distinguishing the present supercharging pressure from a supercharging pressure calculated in another calculation block. In the accompanying drawings and in this description, as necessary, such distinguishing characters may be added to parameters other than the supercharging pressure also, or the contents of the parameters may be represented only by such distinguishing characters.

The intercooler model M3 is a physical model that is constructed on the basis of a conservation law relating to air inside an intercooler in an intake passage. More specifically, an expression of an energy conservation law and an expression of a flow rate conservation law are used as the intercooler model M3. Information such as the compressor flow rate "mcp" calculated by the compressor model M2 and a throttle flow rate "mt" that is calculated by the throttle model M4 that is described later is inputted to the intercooler model M3, and a supercharging pressure "Pic" as a pressure upstream of the throttle is calculated based on the input information.

The throttle model M4 is a model for calculating a flow rate of air passing through a throttle. More specifically, an orifice flow formula that is based on a pressure difference between pressures before and after the throttle, a flow channel area that is determined according to the degree of throttle opening, and a flow rate coefficient is used as the throttle model M4. Information such as a degree of throttle opening predicted value "eta0" that is pre-read by the throttle delay control, the supercharging pressure "Pic" calculated by the intercooler model M3, and an intake pipe pressure "Pm(epmvlv)" calculated by the intake pipe model M5 that is described later is inputted to the throttle model M4, and a throttle flow rate "mt" is calculated based on the input information.

The intake pipe model M5 is a physical model that is constructed on the basis of a conservation law relating to air inside an intake pipe. More specifically, an expression of an energy conservation law and an expression of a flow rate conservation law are used as the intake pipe model M5. Information such as the throttle flow rate "mt" calculated by the throttle model M4 and an intake valve flow rate "mc" that is calculated by the intake valve model M6 that is described later is input to the intake pipe model M5, and an intake pipe pressure "Pm" is calculated based on the input information.

The intake valve model M6 is a model based on experiments that examined a relationship between the intake valve flow rate and the intake pipe pressure. The relationship between the intake air amount and the intake pipe pressure is approximated by a straight line in the intake valve model M6 by means of an empirical rule obtained by experiment. A coefficient of an equation of the straight line is not a constant, but instead is a variable that is determined according to the engine speed, the degree of waste gate valve opening, a valve timing of an intake valve and a valve timing of an exhaust valve and the like. In addition to the intake pipe pressure "Pm" calculated by the intake pipe model M5, information such as an engine speed "NE", the degree of waste gate valve opening "wgv", a valve timing of an intake valve "InVT" and a valve timing of an exhaust valve "ExVT" is input to the intake valve model M6, and an intake valve flow rate "mc(eklvlv)" is calculated based on the input information.

The ECU extracts the supercharging pressure "epicvlv" calculated by the intercooler model M3 from the various parameters that are calculated in the calculation block 2. The supercharging pressure "epicvlv" is a value that is calculated based on the predicted value "eta0" of the degree of throttle opening, and is a predicted value of the supercharging pressure at a future point time that is further in the future by an amount of time corresponding to a predetermined control period. The ECU inputs the extracted supercharging pressure predicted value "epicvlv" to the calculation block 6 that is described later.

The calculation block 4 is a calculation block for calculating an estimated value of the supercharging pressure at the present time point based on a measurement value of the degree of throttle opening measured by the throttle opening sensor. The calculation block 4 is a physical model that has the same configuration as the aforementioned calculation block 2, and is constituted by the turbo rotational speed model M1, the compressor model M2, the intercooler model M3, the throttle model M4, the intake pipe model M5 and the intake valve model M6. The input and output of information among these element models M1, M2, M3, M4, M5 and M6 is common with the input and output of information in the calculation block 2. However, in the calculation block 4, a measurement value "TA" of the degree of throttle opening measured by the throttle opening sensor is inputted to the throttle model M4.

From among the various parameters that are calculated in the calculation block 4, the ECU extracts a supercharging pressure "epiccrt" calculated by the intercooler model M3, an intake pipe pressure "epmcrt" calculated by the intake pipe model M5 and a compressor flow rate "mcpcrt" calculated by the compressor model M2. The supercharging pressure "epiccrt" is calculated based on the measurement value "TA" of the degree of throttle opening at the present time point, and is the estimated value of the supercharging pressure at the present time point. Similarly, the intake pipe pressure "epmcrt" is the estimated value of the intake pipe pressure at the present time point, and the compressor flow rate "mcpcrt" is the estimated value of the compressor flow rate at the present time point. The ECU inputs the extracted supercharging pressure estimated value "epiccrt" to the calculation block 6 that is described next, inputs the extracted intake pipe pressure estimated value "epmcrt" to the calculation block 14 that is described later, and inputs the extracted compressor flow rate estimated value "mcpcrt" to the calculation block 18 that is described later.

In addition to the supercharging pressure predicted value "epicvlv" calculated in calculation block 2 and the supercharging pressure estimated value "epiccrt" calculated in calculation block 4, a measurement value "gapic" of the supercharging pressure that is obtained by the supercharging pressure sensor is also inputted to the calculation block 6. In the calculation block 6, a difference between the supercharging pressure measurement value "gapic" and the supercharging pressure estimated value "epiccrt" is calculated, and the difference is added to the supercharging pressure predicted value "epicvlv". A corrected supercharging pressure predicted value "epicvlv2" is represented by the following equation (1).

[Expression 1]

$$epicvlv2 = epicvlv + (gapic - epiccrt) \quad \cdots Equation\ (1)$$

The supercharging pressure measurement value "gapic" obtained by the supercharging pressure sensor and the supercharging pressure estimated value "epiccrt" calculated in the calculation block 4 each show a supercharging pressure for the same point in time. Accordingly, although theoretically both values should agree, in a case where a physical model constituting the calculation block 4 has a modelling error, a difference will arise between the supercharging pressure measurement value "gapic" and the supercharging pressure estimated value "epiccrt". The aforementioned difference can be utilized as a correction amount with respect to a modelling error irrespective of whether the time of operation is during steady operation or transient operation. In equation (1), the supercharging pressure predicted value "epicvlv" is corrected using the aforementioned difference as a correction amount. Because the measurement value "TA" of the degree of throttle opening and the predicted value "eta0" are equal during steady operation, the supercharging pressure predicted value "epicvlv" agrees with the supercharging pressure estimated value "epiccrt". As a result, as will be understood from equation (1), the corrected supercharging pressure predicted value "epicvlv2" and the supercharging pressure measurement value "gapic" can be made to agree during steady operation. Therefore, during transient operation also, the supercharging pressure predicted value can be prevented from deviating significantly from the actual value, and thus the robustness with respect to modelling errors of the in-cylinder intake air amount prediction is improved.

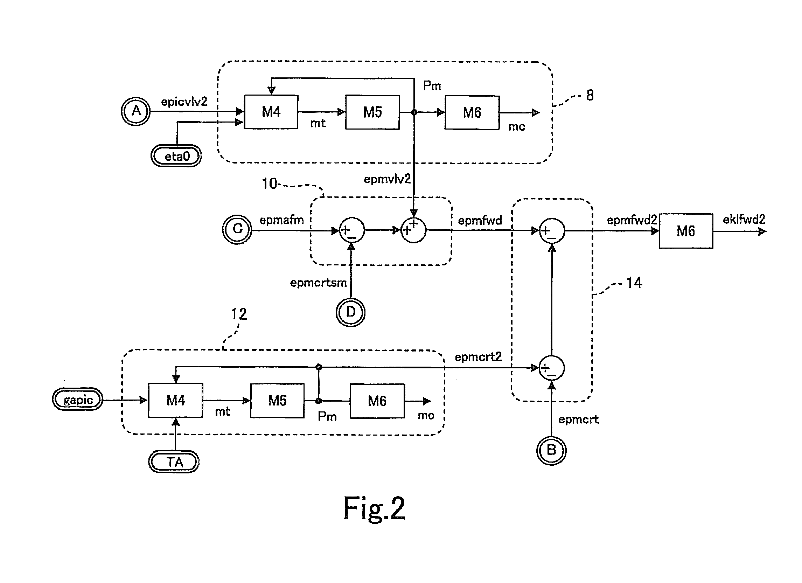

The ECU extracts the corrected supercharging pressure predicted value "epicvlv2" that was calculated in the calculation block 6, and inputs the extracted value to the calculation block 8 illustrated in Figure 2.

Four calculation blocks, namely, blocks 8, 10, 12 and 14 are illustrated in Figure 2. The calculation block 8 is a calculation block for calculating a predicted value of the intake pipe pressure based on the corrected supercharging pressure predicted value and a predicted value of the degree of throttle opening. The calculation block 8 is a sub-model (first sub-model) constituting one part of the physical model of the calculation block 2, and is constituted by the throttle model M4, the intake pipe model M5, and the intake valve model M6. The input and output of information among these element models M4, M5 and M6 is common with the input and output of information in the calculation block 2. However, in the calculation block 8, the corrected supercharging pressure predicted value "epicvlv2" and the degree of throttle opening predicted value "eta0" are inputted to the throttle model M4.

The ECU extracts an intake pipe pressure "epmvlv2" calculated by the intake pipe model M5 from among the various parameters calculated in the calculation block 8. The intake pipe pressure "epmvlv2" is a value that is calculated based on the predicted value "eta0" of the degree of throttle opening and the predicted value "epicvlv2" of the supercharging pressure, and is the predicted value of the intake pipe pressure at a future point in time that is further in the future by an amount of time corresponding to a predetermined control period. The ECU inputs the extracted intake pipe pressure predicted value "epmvlv2" to the calculation block 10 that is described later.

In addition to the intake pipe pressure predicted value "epmvlv2" calculated in the calculation block 8, an intake pipe pressure estimated value "epmafm" calculated in the calculation block 16 that is described later and an intake pipe pressure estimated value "epmcrtsm" calculated in the calculation block 18 that is described later are also inputted to the calculation block 10. In the calculation block 10, a difference between the intake pipe pressure estimated value "epmafm" as a first estimated value and the intake pipe pressure estimated value "epmcrtsm" as a second estimated value is calculated, and the difference is added to the intake pipe pressure predicted value "epmvlv2".

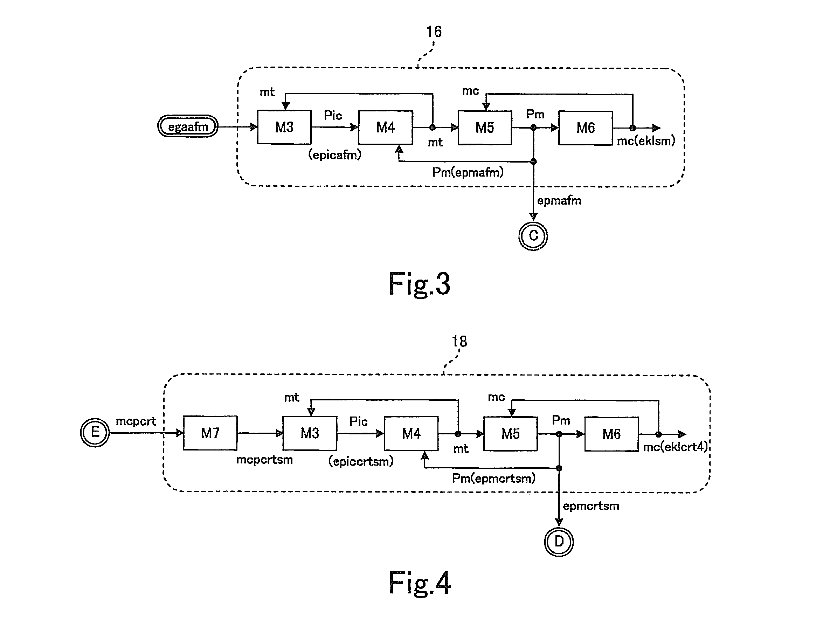

The configuration of the calculation block 16 is illustrated in Figure 3. The calculation block 16 is a calculation block for calculating an estimated value of the intake pipe pressure based on a measurement value of the intake air flow rate measured by the air flow meter. The calculation block 16 is a sub-model (second sub-model) constituting one part of the physical model of the calculation block 2, and is constituted by the intercooler model M3, the throttle model M4, the intake pipe model M5, and the intake valve model M6. The input and output of information among these element models M3, M4, M5 and M6 is common with the input and output of information in the calculation block 2. However, in the calculation block 16, a measurement value "egaafm" of the intake air flow rate measured by the air flow meter is inputted to the intercooler model M3. The intake pipe pressure estimated value "epmafm" at the present time point is calculated based on the intake air flow rate measurement value "egaafm".

The configuration of the calculation block 18 is illustrated in Figure 4. The calculation block 18 is a calculation block for calculating an estimated value of the intake pipe pressure based on an output value of the air flow meter that is estimated by the physical model. In addition to the intercooler model M3, the throttle model M4, the intake pipe model M5, and the intake valve model M6 included in the aforementioned calculation block 16, the calculation block 18 also includes an air flow meter model M7. The air flow meter has a response lag that is based on a unique response characteristic. The air flow meter model M7 is a model that simulates the response characteristic of the air flow meter, and subjects an inputted value of a flow rate in an intake passage to delay processing of an amount corresponding to the response lag of the air flow meter. The compressor flow rate "mcpcrt" that was calculated by the compressor model M2 in the calculation block 4 is inputted to the air flow meter model M7 of the calculation block 18. A compressor flow rate "mcpcrtsm" that has undergone the delay processing by the air flow meter model M7 is inputted to the intercooler model M3. In the calculation block 18, the intake pipe pressure estimated value "epmcrtsm" at the present time point is calculated based on the compressor flow rate "mcpcrtsm" that has undergone the delay processing.

The compressor flow rate "mcpcrtsm" that has undergone the delay processing that is calculated at the calculation block 18 should theoretically agree with the measurement value "egaafm" of the intake air flow rate measured by the air flow meter. However, in practice, a flow rate error that is caused by a modelling error exists between the compressor flow rate "mcpcrtsm" that has undergone the delay processing and the intake air flow rate measurement value "egaafm". Consequently, a difference arises between the intake pipe pressure estimated value "epmafm" calculated at the calculation block 16 and the intake pipe pressure estimated value "epmcrtsm" calculated at the calculation block 18. This difference can be regarded as a value that is obtained when a flow rate error that the compressor flow rate "mcpcrtsm" that has undergone the delay processing has relative to the intake air flow rate measurement value "egaafm" is converted to an error of the intake pipe pressure. In the calculation block 10 illustrated in Figure 2, the aforementioned difference is added to the intake pipe pressure predicted value "epmvlv2" as a correction amount. A corrected intake pipe pressure predicted value "epmfwd" is represented by the following equation (2).

[Expression 2]

$$epmfwd = epmvlv2 + (epmafm - epmcrtsm) \quad \cdots Equation\,(2)$$

The ECU inputs the corrected intake pipe pressure predicted value "epmfwd" calculated in the calculation block 10 into the calculation block 14.

In addition to the corrected intake pipe pressure predicted value "epmfwd" calculated in the calculation block 10, an intake pipe pressure estimated value "epmcrt2" calculated in the calculation block 12 that is described later and the intake pipe pressure estimated value "epmcrt" calculated by the intake pipe model M5 of the calculation block 4 are also inputted into the calculation block 14. In the calculation block 14, a difference between the intake pipe pressure estimated value "epmcrt2" as a third estimated value and the intake pipe pressure estimated value "epmcrt" as a fourth estimated value is calculated, and the difference is subtracted from the corrected intake pipe pressure predicted value "epmfwd".

The calculation block 12 is a calculation block for calculating an estimated value of the intake pipe pressure based on a measurement value of the supercharging pressure obtained by the supercharging pressure sensor and a measurement value of the degree of throttle opening obtained by the throttle opening sensor. The calculation block 12 is a sub-model that has the same configuration as the aforementioned calculation block 8, and is constituted by the throttle model M4, the intake pipe model M5, and the intake valve model M6. The input and output of information among these element models M4, M5 and M6 is common with the input and output of information in the calculation block 8. However, in the calculation block 12, the supercharging pressure measurement value "gapic" and the degree of throttle opening measurement value "TA" are inputted to the throttle model M4. The intake pipe pressure estimated value "epmcrt2" at the present time point is calculated based on these items of information.

In a situation in which an error arises between the supercharging pressure measurement value "gapic" obtained by the supercharging pressure sensor and the supercharging pressure estimated value "epiccrt" calculated in the calculation block 4, an error also arises between the intake pipe pressure estimated value "epmcrt2" and the intake pipe pressure estimated value "epmcrt" that are inputted to the calculation block 14. This difference can be regarded as a value that is obtained when an error that the supercharging pressure estimated value "epiccrt" has relative to the supercharging pressure measurement value "gapic" is converted to an error of the intake pipe pressure. In the calculation block 14, the aforementioned difference is subtracted from the intake pipe pressure predicted value "epmfwd" as a correction amount. A re-corrected intake pipe pressure predicted value "epmfwd2" is represented by the following equation (3).

[Expression 3]

$$epmfwd2 = epmvlv2 + (epmafm - epmcrtsm) - (epmcrt2 - epmcrt) \quad \cdots Equation\ (3)$$

During steady operation, the measurement value "TA" and the predicted value "eta0" of the degree of throttle opening are equal, and the supercharging pressure predicted value "epicvlv2" and the supercharging pressure measurement value "gapic" are also equal, and therefore the intake pipe pressure predicted value "epmvlv2" and the intake pipe pressure estimated value "epmcrt2" that is the third estimated value that are calculated using a model of the same configuration agree. Further, during steady operation, since a supercharging pressure estimated value "epiccrtsm" calculated in the calculation block 18 and a supercharging pressure estimated value "epiccrt" calculated in the calculation block 4 are equal, the intake pipe pressure estimated value "epmcrtsm" that is the second estimated value and the intake pipe pressure estimated value "epmcrt" that is the fourth estimated value agree. Consequently, as will be understood from equation (3), during steady operation the re-corrected intake pipe pressure predicted value "epmfwd2" and the intake pipe pressure estimated value "epmafm" that is based on a measurement value obtained by the air flow meter can be made to agree. Therefore, during transient operation also, the intake pipe pressure predicted value can be prevented from deviating significantly from the actual value, and thus the robustness with respect to modelling errors of the in-cylinder intake air amount prediction is improved.

The ECU inputs the re-corrected intake pipe pressure predicted value "epmfwd2" that was calculated in the calculation block 14 to the intake valve model M6. In the intake valve model M6, an intake valve flow rate "eklfwd2" is calculated based on the re-corrected intake pipe pressure predicted value "epmfwd2". The intake valve flow rate "eklfwd2" is a predicted value of the intake valve flow rate at a future time point that is further in the future by an amount of time corresponding to a predetermined control period. When the timing for calculating a fuel injection amount is reached, the ECU calculates an in-cylinder intake air amount that is predicted for a time of closure of the intake valve based on the intake valve flow rate predicted value "eklfwd2". Further, the ECU calculates a required fuel injection amount using the predicted value of the in-cylinder intake air amount and a target air-fuel ratio.

Other Embodiments

The present invention is not limited to the above described embodiment, and various modifications can be made without departing from the spirit and scope of the present invention. For example, some of the element models used in the foregoing embodiment may be integrated to form a single model. Further, application of the present invention is not limited to a port injection type engine, and the present invention can also be applied to an engine that can combine the use both port injection and direct in-cylinder injection. The present invention can also be applied to a supercharged engine including a mechanical supercharger, and is not limited to a supercharged engine that includes a turbo-supercharger.

Reference Signs List

| | |
|---|---|
| 2, 4, 6, 8, 10, 12, 14, 16, 18 | Calculation block |
| M1 | Turbo rotational speed model |
| M2 | Compressor model |
| M3 | Intercooler model |
| M4 | Throttle model |
| M5 | Intake manifold model |
| M6 | Intake valve model |

M7                           Air flow meter model

**Claims**

1. A control device that predicts an in-cylinder intake air amount of a supercharged engine, and controls the supercharged engine based on a predicted value, comprising:

   means for acquiring a predicted value of a degree of throttle opening at a time point that is a predetermined time after a present time point;
   means for calculating a predicted value of a supercharging pressure based on the predicted value of the degree of throttle opening using a physical model of the supercharged engine;
   means for acquiring a measurement value of the supercharging pressure that is measured by a supercharging pressure sensor;
   means for acquiring a measurement value of the degree of throttle opening that is measured by a throttle opening sensor;
   means for calculating an estimated value of the supercharging pressure based on the measurement value of the degree of throttle opening using the physical model;
   means for calculating a difference between the measurement value and the estimated value of the supercharging pressure, and correcting the predicted value of the supercharging pressure by using the difference as a correction amount; and
   means for calculating a predicted value of an in-cylinder intake air amount based on the corrected predicted value of the supercharging pressure and the predicted value of the degree of throttle opening.

2. The control device for a supercharged engine according to claim 1, wherein the means for calculating the predicted value of the in-cylinder intake air amount comprises:

   means for calculating a predicted value of an intake manifold pressure based on the corrected predicted value of the supercharging pressure and the predicted value of the degree of throttle opening using a first sub-model comprising one part of the physical model;
   means for acquiring a measurement value of an intake air flow rate that is measured by a flow rate sensor;
   means for calculating a first estimated value of the intake manifold pressure based on the measurement value of the intake air flow rate using a second sub-model comprising one part of the physical model;
   means for calculating a second estimated value of the intake manifold pressure based on a value of a predetermined flow rate in an intake passage that is calculated by the physical model during a process of calculating the estimated value of the supercharging pressure, using a response model of the flow rate sensor and the second sub-model; and
   means for calculating a difference between the first estimated value and the second estimated value of the intake manifold pressure, and correcting the predicted value of the intake manifold pressure by using the difference as a correction amount;
   and is configured to calculate the predicted value of the in-cylinder intake air amount based on the corrected predicted value of the intake manifold pressure.

3. The control device for a supercharged engine according to claim 2, wherein the means for calculating the predicted value of the in-cylinder intake air amount further comprises:

   means for calculating a third estimated value of the intake manifold pressure based on the measurement value of the supercharging pressure and the measurement value of the degree of throttle opening using the first sub-model; and
   means for calculating a difference between the third estimated value of the intake manifold pressure and a fourth estimated value of the intake manifold pressure that is calculated by the physical model during a process of calculating the estimated value of the supercharging pressure, and further correcting the corrected predicted value of the intake manifold pressure by using the difference as a correction amount;
   and is configured to calculate the predicted value of the in-cylinder intake air amount based on the further corrected predicted value of the intake manifold pressure.

Fig.1

Fig.2

Fig.3

Fig.4

Fig.5

## INTERNATIONAL SEARCH REPORT

| International application No. |
|---|
| PCT/JP2011/078304 |

A. CLASSIFICATION OF SUBJECT MATTER
*F02D45/00*(2006.01)i, *F02D41/18*(2006.01)i

According to International Patent Classification (IPC) or to both national classification and IPC

B. FIELDS SEARCHED

Minimum documentation searched (classification system followed by classification symbols)
F02D45/00, F02D41/18

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 9-88676 A  (Toyota Motor Corp.),<br>31 March 1997 (31.03.1997),<br>paragraphs [0028], [0030] to [0033], [0037] to [0039], [0044] to [0051]; fig. 5, 6<br>(Family: none) | 1<br>2-3 |
| A | WO 2011/135730 A1  (Toyota Motor Corp.),<br>03 November 2011 (03.11.2011),<br>entire text; all drawings<br>(Family: none) | 1-3 |
| A | JP 2004-211590 A  (Toyota Motor Corp.),<br>29 July 2004 (29.07.2004),<br>entire text; all drawings<br>(Family: none) | 1 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 January, 2012 (05.01.12) | 17 January, 2012 (17.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

**Patent documents cited in the description**

- JP 3760757 B